# EUROPEAN PATENT APPLICATION

(11) **EP 1 988 610 A1**
(43) Date of publication of application: **05.11.2008**
(21) Application number: 07009082.4
(22) Date of filing: 04.05.2007
(51) Int. Cl.: H01R 13/74, H05K 5/02

(54) **Connecting modular structure for DC output of power supply**

(71) Applicant: Silver-Stone Technology Co., Ltd., Jhonghe City 235 Taipei County (TW)
(72) Inventor: Huang, Hsin-Sheng, Kaohsiung City 806 (Qianzhen District) (TW)
(74) Representative: Dickel, Klaus

(57) **Abstract**

The present invention discloses a connecting modular structure for DC output of power supply. The power supply installed in electronic equipment has a housing and the housing has a mainboard installed that is connected to the external input power, and the mainboard has more than one DC output conducting contact points, and the other end of the conducting contact point is respectively connected with the DC power output connector via electric wires, and the power connector is fixed onto the lateral board of the housing so that when in use, the electric wires would not be exposed since the power connector is fastened onto the lateral board of the housing, whereby other devices of the electronic equipment can be connected to the power connector on the lateral board and get the needed power. Thus, the lateral board looks tidy and neat and is convenient for use.

## Description

### BACKGROUND OF THE INVENTION

### Field of the Invention

The present invention relates to a connecting modular structure for DC output of power supply, and more particularly to a power connector fixed on a lateral board of a power supply housing so that electric wires of the power supply do not expose and thus look tidy and neat.

### Description of the Related Art

Following rapid development in science and technology, particularly development of electronic technology, electronic products have now become necessities of modern life and the electronic products are now advancing toward higher performance, smaller in size, lighter, slimmer and with more functions, and such electronic products must be more convenient for use and with better space arrangement.

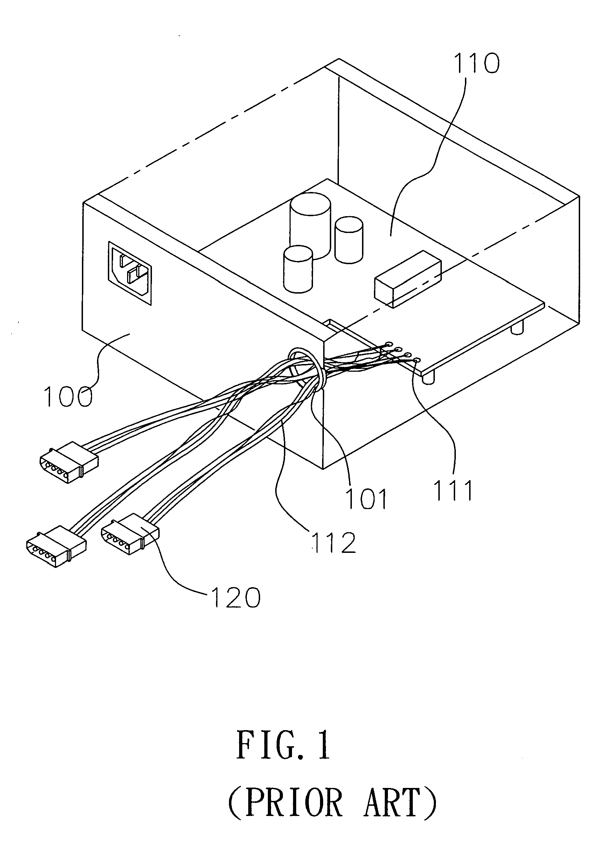

In general, the power supply of a desktop PC, referring to FIG 1, usually has a housing 100, and inside the housing is installed a mainboard 110, and a plurality of related electronic components such as transformer, capacitor and resistor, etc., and the mainboard 110 is connected to an external power input (not shown in the diagram); further, there are a plurality of conducting contact points 111 and the conducting contact points 111 are connected by electric wires 112, and one end of the electric wires 112 passes through an opening 101 on the housing 100 and connects with the connector 120, thereby permitting the input power of the mainboard output to the connector 120 in the form of DC current after going through the transformer. Although such device and structure can be connected to the connector for the connection with other electronic devices and supply the needed power, the electric wires 112 are connected to the conducting contact points 111 which are exposed on a lateral board in the housing. For consideration of connecting more electronic devices to the power supply, a plurality of electric wires are usually reserved for future connection, thus, electric wires 112 not for use for the time being appear disorderly and easily being pulled and entangled, causing inconvenience in use.

### Summary of the Invention

Objective of the invention: The present invention is a further improvement to overcome the shortcomings of conventional technology.

The primary objective of the present invention is to provide a connecting modular structure for DC output of power supply. The invention relates to the power supply used in electronic equipment and the power supply is contained in a housing, and the housing is installed with a mainboard, and the mainboard has more than one conducting contact points for output of direct current, and the conducting contact points are respectively connected to a power supply connector via electric wires so that the electric wires are not exposed. If additional devices are required to connect to the electronic equipment, simply connect the electric wires of the device to the power connector fixed on the lateral board of the housing to get the needed power. Thus, this modular structure makes it tidy and neat and convenient for use.

Another objective of the present invention is to provide a connecting modular structure for DC output of power supply whereby the power connector can be directly fixed on the opening of the lateral board in the housing.

Another objective of the present invention is to provide a connecting modular structure for DC output of power supply whereby the electric wires of the added electronic devices can be connected to the corresponding power connectors of the conducting contact points on the mainboard, and fix the connector on another end of the electric wires in the opening of the lateral board in the housing.

To make it easier for our examiner to understand the objective, shape, structure, device, features and functions of the present invention, the following embodiments accompanied with the related drawings are described in details.

### BRIEF DESCRIPTION OF THE DRAWINGS

FIG 1 is a schematic view of a conventional structure;
FIG 2 is an exploded view of a preferred embodiment in accordance with the present invention;
FIG 3 is a perspective view of another embodiment in accordance with the present invention;
FIG 4 is a perspective view of another embodiment in accordance with the present invention; and
FIG 5 is a perspective view of another embodiment in accordance with the present invention.

### DETAILED DESCRIPTION OF THE PREFERRED EMBODIMENTS

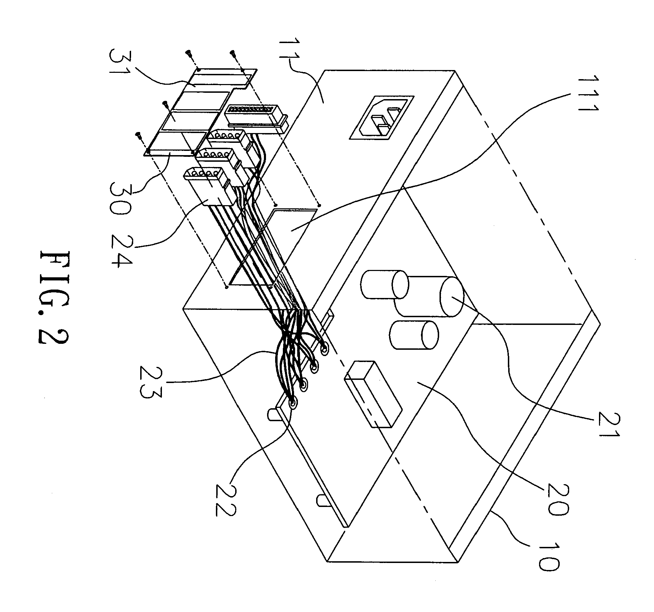

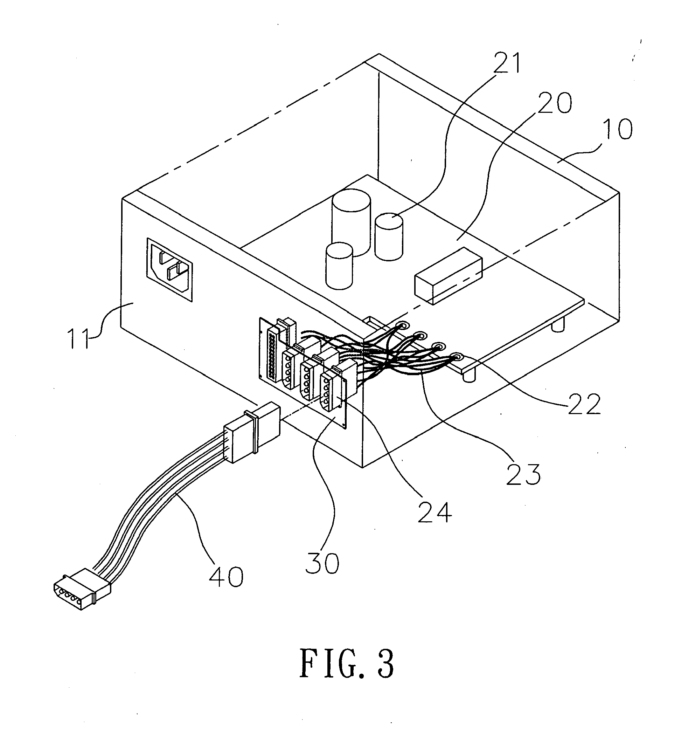

Referring to FIGS. 2 and 3, the present invention relates to a connecting modular structure for DC output of power supply, and more particularly relates to a power supply installed in a computer host as in this embodiment, wherein the power supply has a housing 10 formed by a plurality of lateral boards 11 and a mainboard 20 is installed inside the housing 10, and the mainboard 20 has various electronic components 21 including, in this preferred embodiment, a capacitor, a resistor and a power input/output transformer, etc. The mainboard 20 converts the external power into direct current as power output; further, the mainboard 20 has more than one power output contact points 22, and the output power contact points 22 are connected to the electric wires 23, and the other end of the electric wires are connected to the power connector 24, and the power connectors 24 are embedded onto the fixed board 30 on the lateral board 11; the fixed board 30 has respective openings 31 in the shape of connector 24 for embedding by the power connector 24, and the fixed board 30 is fastened by screws onto the opening 111 on the lateral board 11 of the housing 10, thus, when in use, there will not be exposure of extra electric wires 23 since the power connector 24 is fixed onto the opening 31 of the fixed board 30 and power output electric wires can increase along with additional electronic devices, and the internal devices (such as the processor, optical disk drive, hard disk and display card, etc.) of the electronic equipment can be connected to the power connector 24 on the fixed board 30 with the power connector 40 to get the needed power. The lateral board looks tidy and neat and the fixed board 30 can be disassembled easily, giving convenience in use.

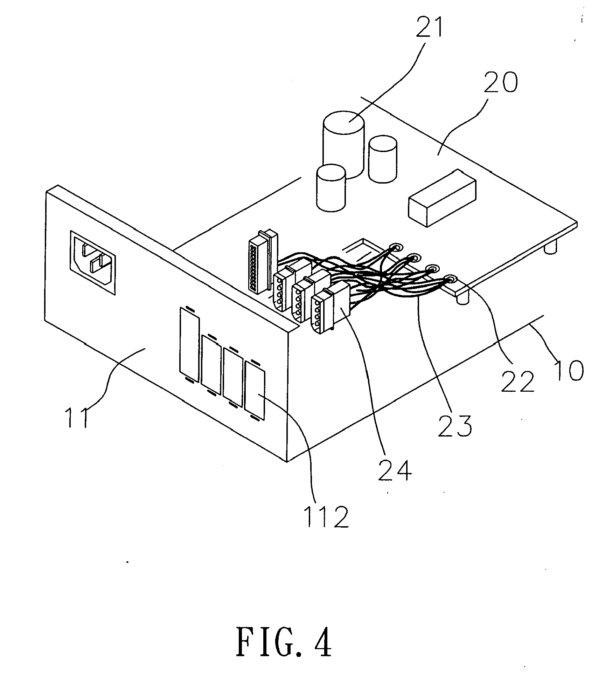

Referring to FIG4 for another preferred embodiment of the present invention, a housing 10 is installed with a mainboard 20 and the mainboard 20 has necessary electronic components 21 including a capacitor, a resistor and a power output/input transformer in this preferred embodiment; the mainboard 20 converts the external power to output as direct current, further, the mainboard 20 has more than one power output contact points 22, and the power output contact points 22 are respectively connected with the power electric wires 23 while the other end of the electric wires 23 is connected to the power connector 24, and the power connector 24 is embedded in the opening 112 of the lateral board 11 on the housing 10, henceforth, when in use, the power connector 24 is fastened onto the lateral board 11 so that the power output electric wires can increase along with additional electronic devices and would not cause exposure of excess electrical wires 23, while other devices (such as a processor, an optical disk drive, a hard disk and a display card, etc.) of the electrical equipment can be connected to the power connector 24 on the lateral board 11 with the power connector 40 to get the needed power. Thus, the lateral board looks tidy and neat and is convenient for use.

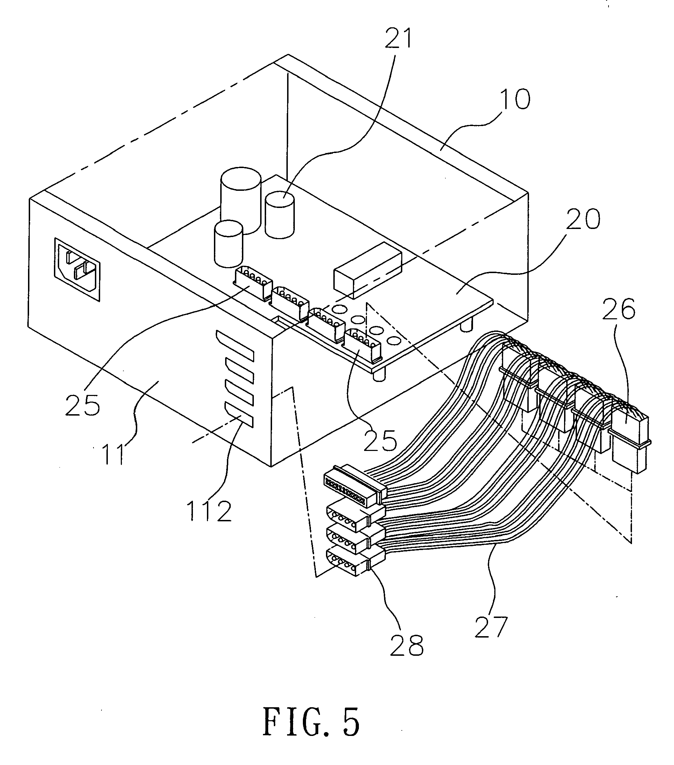

Referring to FIG5 for another preferred embodiment of the present invention, housing 10 is installed with a mainboard 20 and the mainboard 20 has necessary electronic components 21 including a capacitor, a resistor and a power output/input transformer in this preferred embodiment; the mainboard 20 converts the external power to output as direct current, further, the mainboard 20 has more than one power output connectors 25, and the power output connectors 25 are respectively connected with the connectors 26 and latter being connected with the power electric wires 27, while the other end of the electric wires 27 is connected to the power connector 28, and the power connector 28 is embedded in the opening 112 of the lateral board 11 on the housing 10, henceforth, when in use, the power connector 28 is fastened onto the lateral board 11 so that the power output electric wires 27 can increase along with additional electronic devices and would not cause exposure of excess electrical wires 27, while other devices (such as a processor, an optical disk drive, a hard disk and a display card, etc.) of the electrical equipment can be connected to the power connector 28 on the lateral board 11 with the power connector 40 to get the needed power. Thus, the lateral board looks tidy and neat and is convenient for use.

While the invention has been described by way of example and in terms of preferred embodiments, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

In summation, the present invention improves space design, and has unique features overcoming the shortcomings of the conventional technology; it is progressive in terms of the objectives and functions and should be of value for the industry. Moreover, the present invention is not seen on the market and further complies with the patent application requirements and is duly filed for the patent application.

## Claims

1. A connecting modular structure for DC output of power supply, comprising:
a housing, formed by a plurality of lateral boards and the housing inside has a certain space and the lateral boards have a plurality of openings;
a mainboard, installed inside the housing, and the mainboard converts the external input power into output direct current, and the mainboard has more than one output power contact points for connection with the electric wires, and the other end of the electric wires is connected to a power connector, and the power connector is embedded in an opening on a fixed lateral board so that the electric wires will not be exposed outside the housing but plugged into the power connector to get the needed power.

2. The connecting modular structure for DC output of power supply as recited in claim 1, wherein the opening is set on the lateral board for installing a fixed board with openings for embedding the power connectors.

3. The connecting modular structure for DC output of power supply as recited in claim 2, wherein the fixed board is fastened onto the lateral board with screws.

4. The connecting modular structure for DC output of power supply as recited in claim 1, wherein the power contact points on the edge of the mainboard are power connectors for connection with the electric wires.
